# EUROPEAN PATENT SPECIFICATION

(11) **EP 4 197 823 B1**
(45) Date of publication and mention of the grant of the patent: **11.11.2026**
(21) Application number: 22211108.0
(22) Date of filing: 02.12.2022
(51) Int. Cl.: B60C 19/00, B60C 23/04, B60C 5/14

(54) **TIRE WITH CELLULAR MEMBER AND SENSOR**
REIFEN MIT ZELLELEMENT UND SENSOR
PNEU AVEC ÉLÉMENT CELLULAIRE ET CAPTEUR

(30) Priority: 14.12.2021 US 202163289211 P; 08.11.2022 US 202218053543
(43) Date of publication of application: 21.06.2023
(73) Proprietor: The Goodyear Tire & Rubber Company, Akron, OH 44316 (US)
(72) Inventor: NICULA, Adrian Florian, L-2125 Luxembourg (LU); MIDDELBERG, Jason Mark, L-7450 Lintgen (LU); GRIFFOIN, Jean-Claude Patrice Philippe, L-9170 Mertzig (LU); SOULTIS, Nicolas, B-6700 (BE); HILGER, Stephan Peter, B-4770 Medell (BE)
(74) Representative: Leslie, Edward

(56) References cited:
- DE-A1- 102018 220 978
- DE-A1- 102018 220 987
- DE-T5- 112019 003 696
- DE-T5- 112019 003 706
- US-A1- 2011 041 309
- US-A1- 2019 275 849

## Description

### Field of the Invention

The invention relates to vehicle tires. More particularly, the invention relates to vehicle tires that include sensors to determine various conditions within the tires. Specifically, the invention is directed to a tire that includes a sensor and a cellular member which is adapted for optimum mounting of the sensor.

### Background of the Invention

In the manufacture of a pneumatic tire for a vehicle, the tire is typically built on the drum of a tire-building machine, which is known in the art as a tire building drum. Numerous tire components are wrapped about and/or applied to the drum in sequence, forming a cylindrically shaped tire carcass. The tire carcass is then expanded into a toroidal shape for receipt of the remaining components of the tire, such as a belt package and a rubber tread. The completed toroidally-shaped unvulcanized tire carcass, which is known in the art at that stage as a green tire, is then inserted into a mold or press for forming of the tread pattern and curing or vulcanization.

Some tires include a sensor for monitoring various parameters. For example, one type of sensor is a tire pressure monitoring system (TPMS) sensor, which enables the pressure inside the tire to be monitored. A TPMS sensor typically includes an antenna for wirelessly transmitting measured data to a receiver unit for processing and/or storage. TPMS sensors are often mounted to an innerliner of the tire through direct attachment using an adhesive. To ensure optimum operation of the TPMS sensor, correct placement of the sensor on the innerliner is important.

Some tires are equipped with cellular members, such as foam strips, which may be mounted in the tire cavity to dampen noise that is generated in the tire during operation of the vehicle. When a TPMS sensor is employed in a tire that is equipped with such a cellular member, the cellular member may interfere with proper mounting, operation, and/or communication of the TPMS sensor.

As a result, there is a need for a tire that includes a cellular member with structural features that enable proper mounting, operation, and communication of a sensor.

DE 10 2018 220 987 A1 and DE 10 2018 220 978 A1 describe a system in accordance with the preamble of claim 1.

DE 11 2019 003 706 T5, DE 11 2019 003 696 T5 and US 2011/0041309 describe a tire with a foam strip and with a sensor attached to the tire innerliner.

US 2019/0275849 A1 describes an annular hoop with an electronics package received therein. The annular hoop is made of foam and abuts the innerliner.

### Summary of the Invention

The invention relates to a system in accordance with claim 1.

Dependent claims refer to preferred embodiments of the invention.

According to an aspect of an exemplary embodiment of the invention, a tire, cellular member, and sensor combination is provided. The tire includes a pair of sidewalls, a circumferential tread, in which the pair of sidewalls extends to the tread, and an innerliner. A cellular member is disposed on the innerliner and is formed with a sensor opening. A sensor is disposed in the sensor opening and is affixed to the innerliner.

### Definitions

"Axial" and "axially" mean lines or directions that are parallel to the axis of rotation of the tire.

"CAN bus" is an abbreviation for controller area network.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Innerliner" means the layer or layers of elastomer or other material that form the inside surface of a tubeless tire and that contain the inflating fluid within the tire.

"Lateral" means an axial direction.

"Radial" and "radially" mean lines or directions that are perpendicular to the axis of rotation of the tire.

"TPMS" means a tire pressure monitoring system, which is an electronic system that measures the internal pressure of a tire and is capable of communicating the pressure to a processor that is mounted on the vehicle and/or is in electronic communication with electronic systems of the vehicle.

"Tread element" or "traction element" means a rib or a block element defined by a shape having adjacent grooves.

### Brief Description of Drawings

The invention will be described by way of example and with reference to the accompanying drawings, in which:
Figure 1 is a perspective view of a vehicle and a tire of the prior art equipped with a sensor, with the tire shown partially in section;
Figure 2 is a perspective view of an exemplary embodiment of a tire, cellular member, and sensor combination of the present invention, with the tire shown partially in section;
Figure 3 is an enlarged cross-sectional view of a portion of the tire, cellular member, and sensor combination shown in Figure 2; and
Figure 4 is an enlarged plan view of a container for a sensor.

### Detailed Description of Preferred Embodiments of the Invention

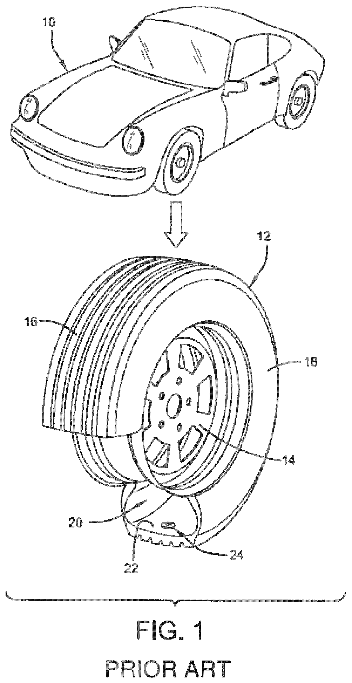

A vehicle 10 and a tire 12 of the prior art are shown in Figure 1. The tire 12 is preferably of conventional construction, and is mounted on a wheel 14. The tire 12 includes a pair of sidewalls 18 that extend to a circumferential tread 16. An innerliner 22 is formed on an inner surface of the tire 12, and a cavity 20 is formed when the tire 12 is mounted on the wheel 14. The tire 12 may be equipped with a sensor 24, which may be a tire pressure monitoring system (TPMS) sensor, and detects tire parameters such as pressure and/or temperature within the tire cavity 20. The sensor 24 preferably is affixed to the innerliner 22.

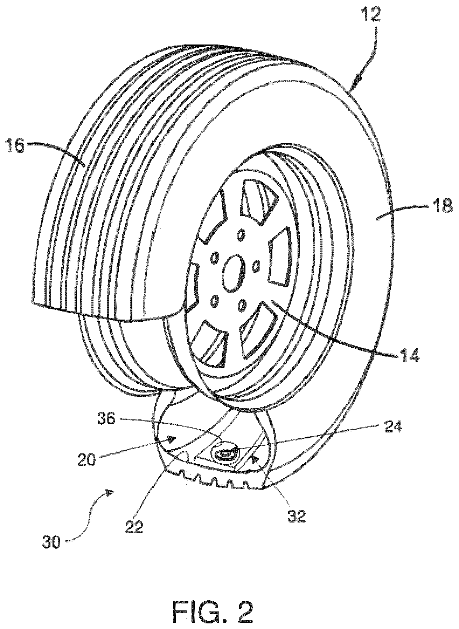

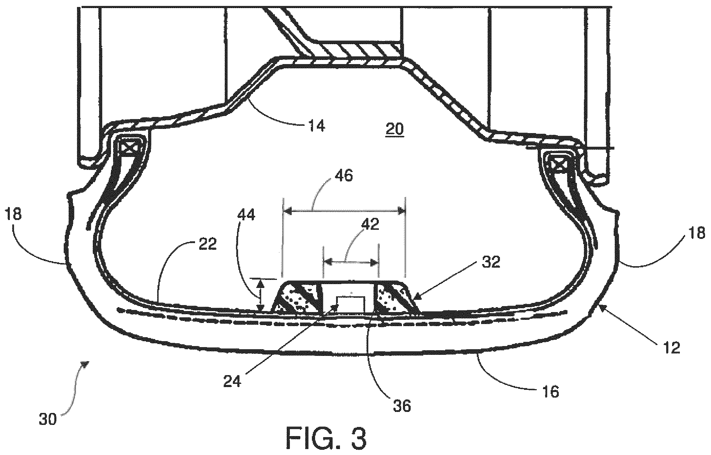

An exemplary embodiment of a tire, cellular member, and sensor combination 30 of the present invention is presented in Figures 2 and 3. The tire, cellular member, and sensor combination 30 employs a tire 12 and sensor 24 as described above. A cellular member 32 is mounted in the tire 12, and preferably is a circumferentially-extending ring formed of open-cell foam. For example, the cellular member 32 may be formed of a strip of polyurethane foam, and is disposed on the innerliner 22 of the tire 12 to form a ring. Alternatively, the cellular member 32 may be formed of a closed-cell foam. The cellular member 32 preferably is attached to the innerliner 22 with an adhesive. The cellular member 32 is disposed in the tire cavity 20 to dampen noise that occurs in the tire 12 during operation of the vehicle 10.

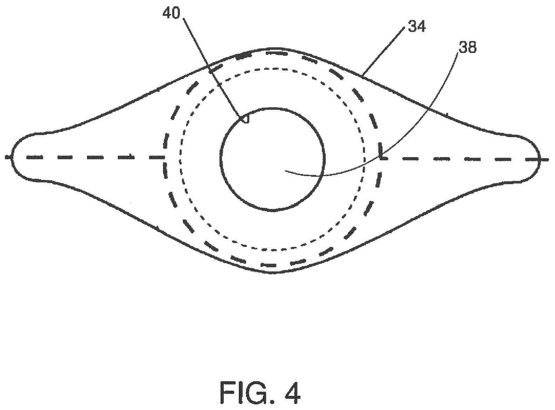

The sensor 24 is disposed in a sensor container 34, which is shown in Figure 4. The sensor 24 may be a TPMS sensor that measures the pressure and/or temperature within the tire cavity 20 or may be a sensor that measures other tire parameters, such as speed, acceleration, and the like. The sensor container 34 is formed of an elastomer and includes a central cavity 38 that receives the sensor 24. A container opening 40 is formed in the sensor container 34 to enable the sensor 24 to be inserted and removed from the central cavity 38. When employed, the sensor container 34 is attached to the innerliner 22 of the tire 12 by an adhesive. The sensor container 34 allows for secure positioning of the sensor 24, while also providing for easy removal and replacement of the sensor.

An exemplary sensor container 34 is shown and described in U.S. Patent No. 6,899,153, which is owned by the Assignee of the present invention, The Goodyear Tire & Rubber Company, and which is incorporated herein by reference.

As shown in Figures 2 and 3, the cellular member 32 is formed with a sensor opening 36. The sensor opening 36 is formed as a closed-wall geometric shape, such as a circular shape. The sensor opening 36 may alternatively be formed in an oval shape, a square shape, a rectangular shape, a hexagonal shape or an octagonal shape. The sensor opening 36 includes a diameter 42 that is smaller than a minimum axial width 46 of the cellular member 32. The sensor opening 36 extends through an entire radial thickness 44 of the cellular member 32, so that the opening extends between the cavity 20 and the innerliner 22.

The diameter 42 of the sensor opening 36 is larger than the sensor. Such a diameter 42 enables the sensor 24 to be inserted directly through the sensor opening 36. The diameter 42 of the sensor opening 36 is larger than the sensor container 34. Such a diameter 42 enables the sensor container 34 to be inserted directly through the sensor opening 36.

The sensor opening 36 enables the container and the sensor 24 to be attached to the innerliner, while the sensor remains in direct communication with the tire cavity 20 for accurate cavity pressure and/or temperature measurements.

The tire, cellular member, and sensor combination of the present invention 30 thus provides a tire 12 that includes a cellular member 32 with structural features that enable proper mounting, operation, and communication of the sensor 24. With this structure, the sensor opening 36 in the cellular member 32 enables the sensor 24 to be installed and/or removed through the tire cavity 20, regardless of the radial thickness of the cellular member.

The sensor opening 36 enables the cellular member 32 to be formed in a continuous ring structure, as the opening includes a diameter 42 that is less than the width 46 of the cellular member. Such a configuration provides continuity and structural integrity for the cellular member 32, while also enabling secure mounting of the sensor container 34 to the innerliner 22. The sensor opening 36 also enables direct communication between the sensor 24 and the tire cavity 22 for accurate pressure and/or temperature measurements.

## Claims

1. A system comprising a tire (12), a cellular member (32) and sensor (24), the tire (12) including a pair of sidewalls (18), a circumferential tread (16), the pair of sidewalls extending to the tread, and an innerliner (22), wherein the cellular member (32) is a circumferentially extending ring formed of open-cell foam or of closed-cell foam, wherein the cellular member (32) is disposed on the innerliner (22) and is formed with a sensor opening (36), the sensor (24) being disposed in the sensor opening (36) and being affixed to the innerliner (22), and wherein the sensor opening (36) is formed as a closed-wall geometric shape, the closed-wall geometric shape being a circular shape, an oval shape, a square shape, a rectangular shape, a hexagonal shape or an octagonal shape, **characterized in that** the sensor (24) is disposed in a sensor container (34) which is attached to the innerliner (22) with an adhesive and **in that** the diameter (42) of the sensor opening (36) is larger than the sensor container (34), wherein the sensor container (34) is formed of an elastomer and includes a central cavity (38) that receives the sensor (24) and wherein a container opening (40) is formed in the sensor container (34) to enable the sensor (22) to be inserted and removed from the central cavity (38).

2. The system of claim 1, wherein the cellular member (32) is formed of a strip of polyurethane foam.

3. The system of at least one of the previous claims, wherein the cellular member (32) is attached to the innerliner (22) with an adhesive.

4. The system of at least one of the previous claims, wherein the sensor opening (36) extends through an entire radial thickness of the cellular member (32).

5. The system of at least one of the previous claims, wherein the sensor opening (36) extends between a tire cavity (20) and the innerliner (22).

6. The system of at least one of the previous claims, wherein the sensor (24) is a tire pressure monitoring system sensor.

## Patentansprüche

1. System, das einen Reifen (12), ein Zellelement (32) und einen Sensor (24) umfasst; wobei der Reifen (12) ein Paar Seitenwände (18), eine umlaufende Lauffläche (16), wobei das Paar Seitenwände sich bis in die Lauffläche hinein erstreckt, sowie eine Innenschicht (22) enthält; wobei das Zellelement (32) einen umlaufenden Ring darstellt, der aus einem offenzelligen oder einem geschlossenzelligen Schaumstoff besteht; wobei das Zellelement (32) auf der Innenschicht (22) angebracht ist und eine Öffnung (36) für den Sensor aufweist; wobei der Sensor (24) in der Öffnung (36) für den Sensor angebracht und an der Innenschicht (22) befestigt ist; und wobei die Öffnung (36) für den Sensor mit einer geschlossenen Wandgeometrie ausgeführt ist; wobei die geschlossene Wandgeometrie eine kreisförmige Form darstellt, eine ovale Form, eine quadratische Form, eine rechteckige Form, eine sechseckige Form oder eine achteckige Form aufweist, **dadurch gekennzeichnet, dass** der Sensor (24) in einem Sensorgehäuse (34) angebracht ist, das mittels eines Klebstoffs an der Innenschicht (22) befestigt ist; und dass der Durchmesser (42) der Öffnung (36) für den Sensor größer ist als der des Sensorgehäuses (34); wobei das Sensorgehäuse (34) aus einem Elastomer besteht und einen zentralen Hohlraum (38) enthält, in dem der Sensor (24) untergebracht ist; und wobei in dem Sensorgehäuse (34) eine Öffnung (40) für das Gehäuse derart ausgebildet ist, dass der Sensor (24) in den zentralen Hohlraum (38) eingefügt und wieder daraus entnommen werden kann.

2. System nach Anspruch 1, wobei das Zellelement (32) aus einem Polyurethanschaumstreifen besteht.

3. System nach mindestens einem der vorstehenden Ansprüche, wobei das Zellelement (32) mit Hilfe eines Klebstoffs an der Innenschicht (22) befestigt ist.

4. System nach mindestens einem der vorstehenden Ansprüche, wobei die Öffnung (36) für den Sensor sich über eine gesamte radiale Dicke des Elements (32) erstreckt.

5. System nach mindestens einem der vorstehenden Ansprüche, wobei die Öffnung (36) für den Sensor sich zwischen einem Hohlraum (20) für den Reifen und der Innenschicht (22) erstreckt.

6. System nach mindestens einem der vorstehenden Ansprüche, wobei der Sensor (24) ein Sensor ist, der Teil eines Überwachungssystems für den Reifendruck des Reifens ist.

## Revendications

1. Système qui comprend un bandage (12), un élément cellulaire (32) et un capteur (24) ; dans lequel le bandage (12) englobe une paire de flancs (18), une bande de roulement circonférentielle (16), dans lequel la paire de flancs s'étend jusque dans la bande de roulement, ainsi qu'un calandrage intérieur (22) ; dans lequel l'élément cellulaire (32) représente un anneau qui s'étend dans la direction circonférentielle, constitué d'une mousse du type à alvéoles ouverts ou d'une mousse du type à alvéoles fermés ; dans lequel l'élément cellulaire (32) est disposé sur le calandrage intérieur (22) et présente une ouverture (36) pour le capteur ; dans lequel le capteur (24) est disposé dans l'ouverture (36) pour le capteur et est fixé au calandrage intérieur (22) ; et dans lequel l'ouverture (36) pour le capteur est réalisée avec une configuration géométrique du type à paroi fermée ; dans lequel la configuration géométrique du type à paroi fermée représente une configuration de forme circulaire, une configuration de forme ovale, une configuration de forme carrée, une configuration de forme rectangulaire, une configuration de forme hexagonale ou une configuration de forme octogonale, **caractérisé en ce que** le capteur (24) est disposé dans un boîtier de capteur (34) qui est fixé au calandrage intérieur (22) à l'aide d'un adhésif ; et **en ce que** le diamètre (42) de l'ouverture (36) pour le capteur est supérieur à celui du boîtier de capteur (34) ; dans lequel le boîtier de capteur (34) est constitué d'un élastomère et englobe une cavité centrale (38) dans laquelle vient se loger le capteur (24) ; et dans lequel on forme une ouverture (40) pour le boîtier dans le boîtier de capteur (34) d'une manière telle que l'on peut insérer le capteur (24) dans la cavité centrale (38) et l'en retirer.

2. Système selon la revendication 1, dans lequel l'élément cellulaire (32) est constitué d'une bande de mousse de polyuréthane.

3. Système selon au moins une des revendications précédentes, dans lequel l'élément cellulaire (32) est fixé au calandrage intérieur (22) à l'aide d'un adhésif.

4. Système selon au moins une des revendications précédentes, dans lequel l'ouverture (36) pour le capteur s'étend sur une épaisseur radiale entière de l'élément cellulaire (32).

5. Système selon au moins une des revendications précédentes, dans lequel l'ouverture (36) pour le capteur s'étend entre une cavité (20) pour le bandage et le calandrage intérieur (22).

6. Système selon au moins une des revendications précédentes, dans lequel le capteur (24) est un capteur qui fait partie d'un système de surveillance de la pression d'un bandage.
